# EUROPÄISCHE PATENTSCHRIFT

(11) **EP 0 387 534 B1**
(45) Veröffentlichungstag und Bekanntmachung des Hinweises auf die Patenterteilung: **07.01.1993**
(21) Anmeldenummer: 90102843.1
(22) Anmeldetag: 14.02.1990
(51) Int. Cl.: B64C 1/20

(54) **Vorrichtung zum automatischen Einführen und Ausrichten von Frachtbehältern**
Automatic inserting and centering device for freight containers
Dispositif pour l'introduction et le centrage automatiques de conteneurs de charge

(30) Priorität: 14.03.1989 DE 3908257
(43) Veröffentlichungstag der Anmeldung: 19.09.1990
(73) Patentinhaber: Deutsche Airbus GmbH, 21129 Hamburg (DE)
(72) Erfinder: Engel, Hinrich, D-2800 Bremen (DE); Palme, Gerhard, D-2875 Ganderkesee (DE); Sempert, Hartmut, D-2870 Delmenhorst (DE)

(56) Entgegenhaltungen:
- EP-A- 0 044 404
- FR-A- 2 528 383
- US-A- 3 415 480
- US-A- 3 986 460

## Beschreibung

Die Erfindung bezieht sich auf eine Vorrichtung zum automatischen Einführen und Ausrichten von Frachtbehältern, wie Paletten oder Container in mobilen Frachträumen, mit aus den Stellplätzen der Frachtbehälter bestehenden Förderwegen und daraus hervorstehenden Riegelelementen, welche zum Einführen und Arretieren der Frachtbehälter über daran vorgesehene Führungselemente greifen.

Beim Transport von Frachtbehältern, wie Paletten oder Container in mobilen Frachträumen besteht der Wunsch das jeweils benutzte Verkehrsmittel schnell zu be- und entladen. Dies gilt insbesondere dort, wo lange Be- und Entladezeiten teure Verkehrsmittel, wie Transportflugzeuge, blockieren. Das Be- und Entladen von mobilen Frachträumen führt aber häufig zu einer Überbeanspruchung der Frachtbehälter, so daß sich insbesondere Paletten an Ecken und Rändern durch Überspannungen defomieren. Solche Deformierungen sind aber häufig Ursache von Störungen, weil die Ränder, bzw. Kanten oder Führungselemente der Frachtbehälter nicht ordnungsgemäß von den Riegelelementen der Frachträume erfaßt werden.

Zur Vermeidung von Störungen ist bisher ein zwangsweises Einfädeln bzw. Herabdrücken deformierter Frachtbehälter mit schräg nach unten weisenden staren Führungsschienen vorgenommen worden, doch solche Führungsschienen sind nur dort einsetzbar, wo ausschließlich Paletten transportiert werden. Da Container im Gegensatz zu den Haltestegen der Paletten Nuten besitzen ist ein gemeinsamer Transport von Paletten und Containern wegen der zum Einfädeln erforderlichen Führungsschiene nicht möglich.

Der Erfindung liegt daher die Aufgabe zugrunde eine Vorrichtung zum automatischen Einführen und Ausrichten von Frachtbehältern vorzusehen, die es gestattet Paletten und Container gemeinsam zu transportieren. Diese Aufgabe ist erfindungsgemäß dadurch gelöst, daß die Vorrichtung einen schwenkbaren Führungshebel mit einem Niederhalter aufweist, und daß der Führungshebel durch einen aus dem Boden des Frachtraumes hervorstehenden aus drei Richtungen überfahrbaren Stellhebel zum Einfahren der Frachtbehälter verstellbar ist.

Die erfindungsgemäße Vorrichtung gestattet durch das Schwenken des Führungshebels deformierte Paletten und Container automatisch auszurichten und einzufädeln und damit gemeinsam zu transportieren. Dabei ist es zweckmäßig den Führungshebel an einer Einfahrführung im Torbereich des mobilen Frachtraumes anzuordnen und über Koppelglieder mit dem Stellhebel zu verbinden. Der Niederhalter ist dabei so einzustellen, daß dieser im eingeschwenkten Zustand des Führungshebels in Höhe der sog. "Z-Riegel" eines Frachtladesystems liegt.

Weiterbildungen und vorteilhafte Ausgestaltungen der Erfindung sind den Ansprüchen 4 bis 10 zu entnehmen.

Die Erfindung wird anhand der bei liegenden Zeichnung näher erläutert. Es zeigen:
Fig. 1 eine Vorrichtung zum automatischen Einführen und Ausrichten von Frachtbehältern in Schrägdarstellung,
Fig. 2 eine Vorderansicht der Vorrichtung nach Fig. 1,
Fig. 3 eine Draufsicht der Vorrichtung nach Fig. 1,
Fig. 4 zwei Schnitte IV-IV gemäß Fig. 1,
Fig. 5 einen Ausrichtvorgang einer Palette und
Fig. 6 einen Ausrichtvorgang eines Containers.

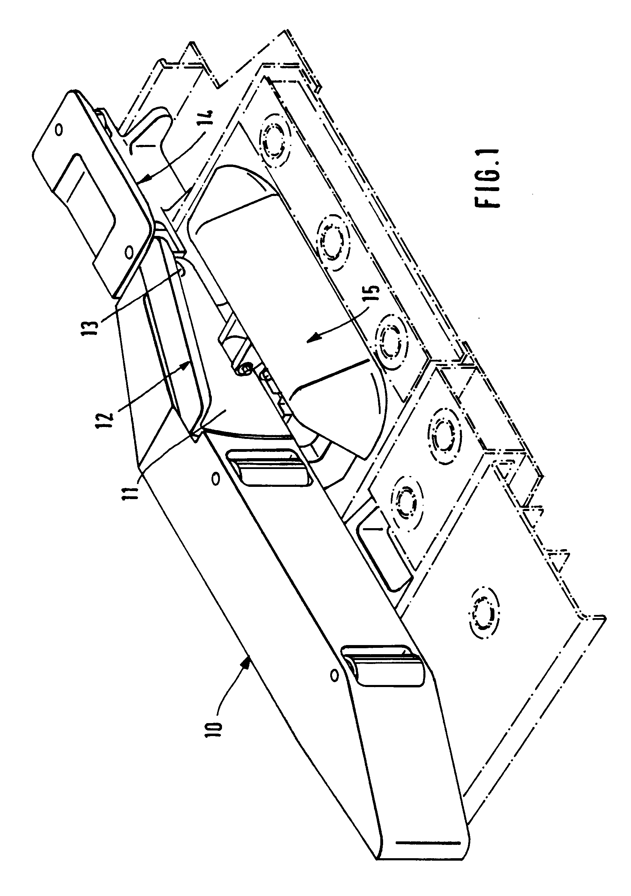

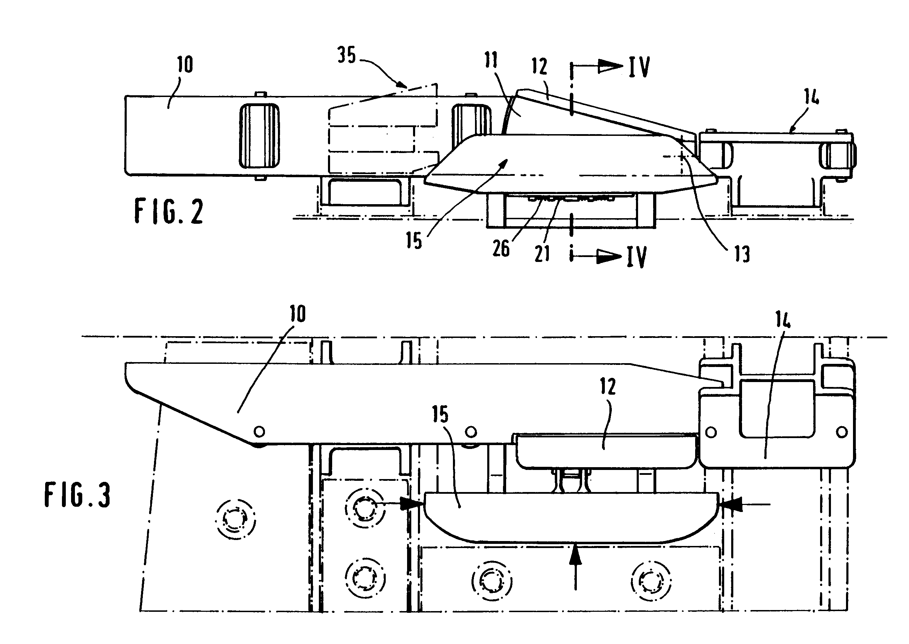

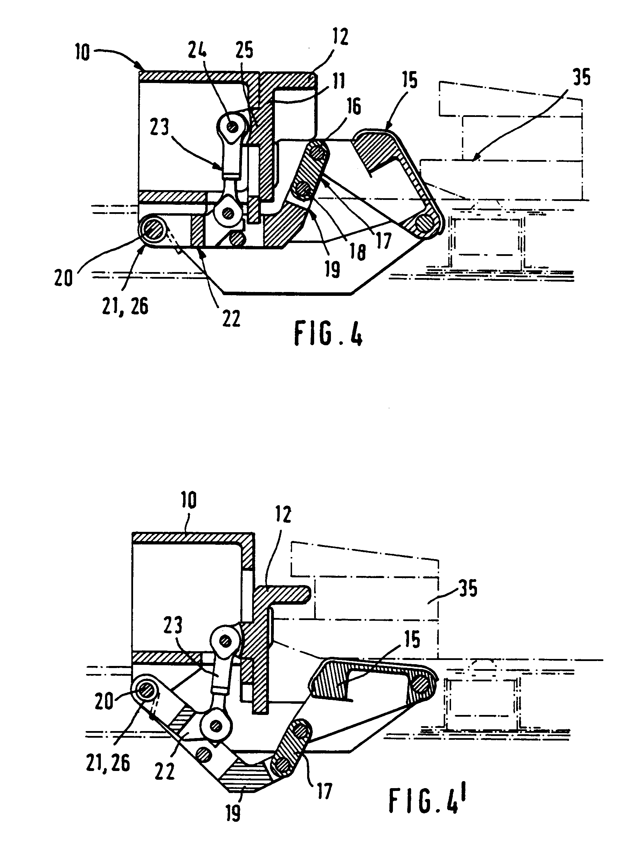

Wie die Schrägdarstellung nach Fig. 1 zeigt, ist die Vorrichtung zum automatischen Einführen und Ausrichten von Frachtbehältern an einer Einfahrführung 10 im Torbereich eines Transportflugzeuges angeordnet. In der Seitenwand dieser Einfahrführung 10 ist ein Führungshebel 11 mit einem Niederhalter 12 an einem Lagerbolzen 13 schwenkbar gelagert. Der Niederhalter 12 bildet eine schräge und schwenkbare Führungsschiene, die im eingeschwenktem Zustand waagerecht ist und mit der Höhe des nachgeordneten Z-Riegels 14 übereinstimmt. Zum Schwenken des Führungshebels 11 dient ein Stellhebel 15, der aus einem länglichen an seinen Stirnseiten etwa unter 45° abgeschrägten Körper besteht. Dieser Stellhebel 15 ist quer zu seiner Längsrichtung an der Einfahrführung gelagert, d.h. seine Lagerachse verläuft parallel zu seiner Längsausdehnung. Der Stellhebel 15 ist dabei so an der Einfahrführung 10 gelagert und angeordnet, daß er aus dem Boden des Frachtraumes hervorsteht. Die Darstellungen nach Fig. 2 und Fig. 4 lassen dieses Hervorstehen erkennen und außerdem zeigen diese Darstellungen, daß der Stellhebel 15 von den Frachtbehältern überfahrbar ist. Im überfahrenen Zustand gemäß Fig. 4 liegt der Stellhebel 15 in der Bodenebene des Frachtraumes.

Die Bewegung des Stellhebels 15 wird wie Fig. 4 und Fig. 4′zeigen auf den Führungshebel 11 übertragen, so daß beim Überfahren des Stellhebels 15 der Führungshebel 11 geschwenkt wird. Dazu ist der Stellhebel 15 mit einem Bolzen 16 an einer Lasche 17 angekoppelt, die ihrerseits über einen Bolzen 18 mit einem Übertragungshebel 19 gekoppelt ist. Der Übertragungshebel 19 ist an einem Lagerbolzen 20 in der Einfahrführung 10 gelagert und über eine Feder 21 mit einem ebenfalls an dem Lagerbolzen 20 angelenkten Absenkhebel 22 gekoppelt. Am Absenkhebel 22 greift eine Koppelstange 23 mit einem Gelenklager an, deren anderes Ende ebenfalls mit einem Gelenklager und einem Lagerbolzen 24 an die an der Rückseite des Führungshebels 11 vorgesehene Lagerlasche 25 angreift. Eine Rückstellfeder 26, die am Lagerbolzen 20 vorgesehen ist und zwischen der Einfahrführung und dem Übertragungshebel 19 wirkt, bewirkt stets eine Rückstellung des Stellhebels 15 und damit des Führungshebels 11 in die hochgeschwenkte Position (Fig. 4).

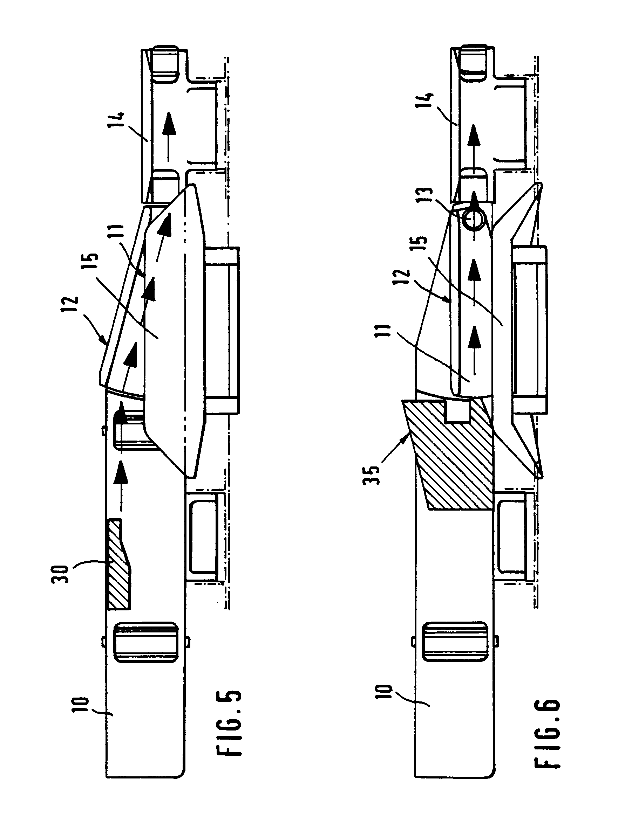

Wie die Darstellung nach Fig. 5 zeigt, wird eine Palette 30 mit ihren Führungselementen beim Einfahren vom Niederhalter 12 des Führungshebels erfaßt und unter den Z-Riegel 14 eines Frachtladesystems geleitet. Bei Containern 35, die als Führungselement eine Nut besitzen, erfolgt die Einführung durch Niederdrücken des Führungshebels 11, wie Fig. 6 zeigt. Ein gemeinsamer Transport von Paletten und Containern kann daher mit der beschriebenen Vorrichtung zum automatischen Einführen der Frachtbehälter ohne Probleme vorgenommen werden.

## Patentansprüche

1. Vorrichtung zum automatischen Einführen und Ausrichten von Frachtbehältern, wie Paletten oder Container in mobilen Frachträumen, mit aus den Stellplätzen der Frachtbehälter bestehenden Förderwegen und daraus hervorstehenden Riegelelementen, welche zum Führen und Arretieren der Frachtbehälter über daran vorgesehene Führungselemente greifen, **dadurch gekennzeichnet**, daß die Vorrichtung einen schwenkbaren Führungshebel (11) mit einem Niederhalter (12) aufweist, und daß der Führungshebel (11) durch einen aus dem Boden des Frachtraumes hervorstehenden aus drei Richtungen überfahrbaren Stellhebel (15) zum Einfahren der Frachtbehälter (30, 35) verstellbar ist.

2. Vorrichtung nach Anspruch 1, **dadurch gekennzeichnet**, daß der Führungshebel (11) an einer Einfahrführung (10) im Torbereich des mobilen Frachtraumes angeordnet ist und über Koppelglieder mit dem Stellhebel (15) in Verbindung steht.

3. Vorrichtung nach Anspruch 1 oder 2, **dadurch gekennzeichnet**, daß der Niederhalter (12) am Führungshebel (11) im eingeschwenkten Zustand mit der Höhe der "Z-Riegel" (14) eines Frachtladesystems übereinstimmt.

4. Vorrichtung nach einem der Ansprüche 1 bis 3, **dadurch gekennzeichnet**, daß der Führungshebel (11) an der Einfahrführung (10) auf einem Lagerbolzen (13) gelagert ist und mit zwei Lagerlasche (25) auf seiner Rückseite durch einen Durchbruch in der Wand der Einfahrführung (10) greift, und daß an den Lagerlaschen (25) eine Koppelstange (23) angelenkt ist, deren anderes Ende an einem in der Einfahrführung (10) angelenkten Absenkhebel (22) angreift.

5. Vorrichtung nach einem der Ansprüche 1 bis 4, **dadurch gekennzeichnet**, daß der Absenkhebel (22) gemeinsam mit einem Übertragungshebel (19) in der Einfahrführung (10) angelenkt und über eine Feder (21) damit gekoppelt ist, und daß das andere Ende des gegen eine Rückstellfeder (25) schwenkbaren Übertragungshebels (19) über eine Lasche (17) mit dem Stellhebel (15) gekoppelt ist.

6. Vorrichtung nach einem der Ansprüche 1 bis 5, **dadurch gekennzeichnet**, daß die Schwenkbewegung des Führungshebels (11) durch Auflaufen der Lagerlasche (25) im Durchbruch der Einfahrführung (10) begrenzt ist.

7. Vorrichtung nach einem der Ansprüche 1 bis 6, **dadurch gekennzeichnet**, daß die Koppelstange (23) mit Gelenklagern an die Lagerlasche (25) des Führungshebels (11) und an den Absenkhebel (22) angeschlossen ist.

8. Vorrichtung nach einem der Ansprüche 1 bis 7, **dadurch gekennzeichnet**, daß der Stellhebel (15) aus einem länglichen an seinen beiden Stirnseiten abgeschrägten und quer zur Längsrichtung gelagerten Körper besteht.

9. Vorrichtung nach einem der Ansprüche 1 bis 8, **dadurch gekennzeichnet**, daß die Stirnseiten des Stellhebels (15) unter etwa 45° abgeschrägt sind.

10. Vorrichtung nach einem der vorhergehenden Ansprüche, **dadurch gekennzeichnet**, daß eine Längsseite des Stellhebels (15) unter etwa 60° abgeschrägt ist.

## Claims

1. Device for automatic entry and alignment of freight containers, such as pallets or containers in mobile freight spaces, comprising conveyor paths composed of control areas for freight containers and therefrom protruding locking elements which engage thereat provided guide elements for guiding and arresting the freight containers, **characterised in that** the device comprises a pivotable guide lever (11) with a holding-down means (12), and that the guide lever (11) is adjustable for the entry of freight containers (30̸, 35) by means of a control lever (15), which protrudes from the bottom of the freight space and can be moved over from three direction.

2. Device according to claim 1, **characterised in that** the guide lever (11) is disposed at an entry guide (10̸) in the gate region of a mobile freight space and connected to the control lever (15) via coupling elements.

3. Device according to claim 1 or 2, **characterised in that** the holding-down means (12) at the guide lever (11) in its pivoted-in state corresponds with the height of the "Z-locks" (14) of a freight-loading system.

4. Device according to one of claims 1 to 3, **characterised in that** the guide lever (11) is mounted at the entry guide (10̸) on a mounting pin (13) and reaches with two mounting plates (25) at its back through a passage in the wall of the entry guide (10̸), and that hinged to the mounting plates (25) is a coupling rod (23), the other end of which engages a lowering lever (22) which is hinged to the entry guide (10̸).

5. Device according to one of claims 1 to 4, **characterised in that** the lowering lever (22) and a transfer lever (19) are together hinged in the entry guide (10̸) and coupled thereto by a spring (21), and that the other end of the transfer lever (19), which is pivotable against a return spring (25), is coupled to the control lever 15 via a plate (17).

6. Device according to one of claims 1 to 5, **characterised in that** the pivoting movement of the guide lever (11) is restricted by running up of the mounting plate (25) in the passage of entry guide (12).

7. Device according to one of claims 1 to 6, **characterised in that** the coupling rod (23) is connected with hinged mounts to the mounting plate (25) of the guide lever (11) and to the lowering lever (22).

8. Device according to one of claims 1 to 7, **characterised in that** the control lever (15) comprises an oblong body having two angled sides and which is mounted transversely to the longitudinal direction.

9. Device according to one of claims 1 to 8, **characterised in that** the ends of the control lever (15) are angled at approximately 45°.

10. Device according to one of the above claims, characterised in that one longitudinal side of the control lever (15) is angled at approximately 60̸°.

## Revendications

1. Dispositif pour le chargement et le calage automatiques de conteneurs à marchandises, tels que des palettes ou des conteneurs, dans des compartiments à marchandises mobiles, lequel dispositif comporte des chemins de transport qui sont constitués par les emplacements d'entreposage des conteneurs à marchandises et des éléments de verrouillage en saillie par rapport à ceux-ci qui agissent sur des éléments de guidage des conteneurs à marchandises afin de guider et de bloquer ces derniers, caractérisé par le fait que le dispositif comporte un levier de guidage (11) pivotant muni d'un dispositif de serrage (12) et que, pour la mise en place des conteneurs à marchandises (30, 35), le levier de guidage (11) est déplacé au moyen d'un levier de commande (15) qui sort du plancher du compartiment à marchandises et est mobile dans trois directions.

2. Dispositif selon la revendication 1, caractérisé par le fait que le levier de guidage (11) est disposé sur une glissière d'entrée (10) dans la région de la porte du compartiment à marchandises mobile et est relié au levier de commande (15) au moyen d'organes de couplage.

3. Dispositif selon la revendication 1, caractérisé par le fait que le dispositif de serrage (12) du levier de guidage (11), en position rentrée, coïncide avec la hauteur du "verrou Z" (14) d'un système de chargement de marchandises.

4. Dispositif selon l'une des revendications 1 à 3, caractérisé par le fait que le levier de guidage (11) est monté sur un axe d'articulation (13) sur la glissière d'entrée (10) et comporte sur sa face arrière deux pattes d'articulation (25) qui pénètrent dans une ouverture de la paroi de la glissière d'entrée (10) et qu'une biellette d'accouplement (23) est articulée sur les pattes d'articulation (25), biellette dont l'autre extrémité agit sur un levier d'abaissement (22) articulé sur la glissière d'entrée (10).

5. Dispositif selon l'une des revendications 1 à 4, caractérisé par le fait que le levier l'abaissement (22) est articulé sur la glissière d'entrée (10) conjointement avec un levier de transmission (19) et est couplé à celui-ci par l'intermédiaire d'un ressort (21) et que l'autre extrémité du levier de transmission (19) qui peut pivoter à l'encontre de la force d'un ressort de rappel (26) est couplée au levier de commande (15) par l'intermédiaire d'une patte (17).

6. Dispositif selon l'une des revendications 1 à 5, caractérisé par le fait que le mouvement de pivotement du levier de guidage (11) est limité par le déplacement de la patte d'articulation (25) dans l'ouverture de la paroi de la glissière d'entrée (10).

7. Dispositif selon l'une des revendications 1 à 6, caractérisé par le fait que la biellette d'accouplement (23) est reliée à la patte (25) du levier de guidage (11) et au levier d'abaissement (22) par l'intermédiaire d'articulations.

8. Dispositif selon l'une des revendications 1 à 7, caractérisé par le fait que le levier de commande (15) est constitué par un élément allongé dont les deux extrémités frontales sont inclinées et qui est monté perpendiculairement à la direction longitudinale.

9. Dispositif selon l'une des revendications 1 à 8, caractérisé par le fait que les faces frontales du levier de commande (15) sont inclinées à 45° environ.

10. Dispositif selon l'une des revendications précédentes, caractérisé par le fait que l'un des grands côtés du levier de commande (15) est incliné à 60° environ.
